Europäisches Patentamt

European Patent Office

Office européen des brevets

(11) Publication number: 0 316 004
A2

# EUROPEAN PATENT APPLICATION

(21) Application number: 88118832.0

(22) Date of filing: 11.11.88

(51) Int. Cl.⁴: G11B 7/24 , G11B 7/26

(30) Priority: 11.11.87 JP 283009/87
19.02.88 JP 35163/88

(43) Date of publication of application:
17.05.89 Bulletin 89/20

(84) Designated Contracting States:
DE FR GB

(71) Applicant: KABUSHIKI KAISHA TOSHIBA
72, Horikawa-cho Saiwai-ku
Kawasaki-shi Kanagawa-ken 210(JP)

(72) Inventor: Sasaki, Osamu
17-3-13, Nishihashimoto 1-chome
Sagamihara-shi Kanagawa-ken(JP)
Inventor: Matake, Shigeru
41-20-106, Sasage 3-chome Konan-ku
Yokohama-shi Kanagawa-ken(JP)
Inventor: Matsumaru, Masaaki
8-12, Motonakayama 7-chome
Funabashi-shi Chiba-ken(JP)
Inventor: Shimizu, Seizaburo
Kirigaokagreentown 18-103 6-1 Kirigaoaka
Midori-ku Yokohama-shi Kanagawa-ken(JP)

(74) Representative: Ritter und Edler von Fischern,
Bernhard,Dipl.-Ing. et al
HOFFMANN - EITLE & PARTNER
Arabellastrasse 4
D-8000 München 81(DE)

(54) Optical disk and its manufacturing method.

(57) An optical disk (10) comprises a substrate (11) for recording information and a light reflective metal thin film (12) formed on the substrate (11). A light beam is made incident to the substrate (11) and reflected by the metal thin film (12), and from the reflected light beam, the information can be read. At least 60% of the area of the metal thin film (12) is composed of crystals each of 500 Å or above in diameter.

FIG.9

## OPTICAL DISK AND ITS MANUFACTURING METHOD

### BACKGROUND OF THE INVENTION

#### Field of the Invention

The present invention relates to optical disks such as video disks, compact disks, digital audio disks and document file disks that have metal thin films for reflecting light beams.

#### Description of the Prior Art

The optical disk basically comprises a substrate and a light reflective metal thin film disposed on the substrate. Pieces of information are recorded on the substrate in advance or afterwords, and they are optically read out of the disk. In reading the information from the optical disk, a light beam is made incident into the substrate and reflected by the reflective metal thin film, and the information is read out of the reflected light beam.

Generally, the optical disk is produced through the following processes.

Firstly, an inverted pattern of recording information is formed on the surface of a stamper. By using this stamper, resin is injection-molded or compression-molded to form a substrate having the information. The information recorded surface of the substrate is covered with a metal thin film through a spattering technique or a vapor deposition technique. Two of the information recorded disks are adhered to each other with the information recorded surfaces coming inside, or a protective film made of resin is applied to the metal thin film (a reflective film) to complete the optical disk.

To read the information recorded on the optical disk, an optical pickup emits a light beam to the optical disk. The light beam is reflected by the reflective metal thin film, and the information is read from the reflected light beam. In this process, a ratio of information signal to noise, i.e., a carrier-to-noise (C/N) ratio changes depending on the surface structure of the reflective metal thin film.

To roughly indicate a performance of the reflective metal thin film, a reflectance of the film is generally used. The reflectance is substantially the same for the same sort of films even if they have been formed through different conditions. The C/N ratio, however, tends to vary if the films have different forming conditions, even if there is no difference in the reflectance. Namely, irrespective of endeavor to maintain the reflectance to be the same, the C/N ratio may vary to destabilize the quality of optical disks.

On the other hand, to prevent the optical disk from deteriorating as time elapsing, the reflective metal thin film such as an aluminum thin film on the optical disk is conventionally formed with crystal grains each of 500 Å or below in diameter as disclosed in Japanese Laid-Open Patent No. 62-154243. To make such crystal grains of 500 Å or below in diameter, it is known to deposit aluminum at a speed of 15 Å/sec or below as disclosed in Japanese Laid-Open Patent No. 62-154246. Namely, these documents disclose techniques to micronize crystal grains by slowing the deposition speed.

However, these prior arts are not taking the C/N ratio into consideration and, therefore, they are disclosing no concrete measures for improving the C/N ratio. Even if aluminum is deposited at 15 Å/sec or below to grow crystal grains each of 500 Å or below in diameter, the C/N ratio of the aluminum film may not necessarily be improved but may vary greatly.

### SUMMARY OF THE INVENTION

To cope with these problems, an object of the present invention is to provide a method of manufacturing optical disks each having a high C/N ratio and less variation.

Another object of the present invention is to provide an apparatus for inspecting a reflective film of an optical disk. The apparatus measures X-ray diffraction strength to nondestructively judge the acceptability of a C/N ratio of the reflective film of the optical disk.

In order to accomplish the objects, the present invention provides an optical disk which comprises a substrate for recording information and a light reflective metal thin film disposed on the substrate to reflect a light beam made incident to the substrate to enable the information recorded on the substrate to be read. The metal thin film is characterized in that at least 60% of an area of film is formed with crystals each of 500 Å or above in diameter.

In reading the information recorded on the optical disk, a light beam of about 1 $\mu$m in diameter is used. Therefore, according to conventional understandings, the diameter of each grain of the reflective thin film on the optical disk shall be as small as possible to average and eliminate adverse effects of grain boundaries and improve a C/N ratio of the thin film. However, the inventors of the present invention found a fact opposing to the conventional understandings that, as grains of large diameter occupy large area in the reflective thin film of the optical disk, the C/N ratio of the thin film improves and shows reduced variation. The reason of this fact will be as follows.

As shown in Fig. 1 a disk surface 1 is coated with a metal thin film 3 made of crystal grains 5 each of which is not spherical but almost in a plate-like shape. Therefore, if the grains have large diameter as shown in Fig. 2, grain boundaries between the crystal grains 5 will be small to reduce adverse effects of the grain boundaries with respect to light reflection. On the contrary, if the grains have small diameter as shown in Fig. 3, the grain boundaries will be large to increase the adverse effects of the boundaries with respect to light reflection.

An important point of the present invention is a ratio of area occupied by crystal grains each of 500 Å or above in diameter. The area ratio shall be at least 60% or above, preferably 80% or above. The diameter shall be 500 Å or above, and larger the better. It is preferable that crystals each of 800 Å or above in diameter occupy 60% or above of the area.

If a film depositing direction is biased from a direction vertical to the surface of the optical disk, a ratio of small crystal grains increases. Therefore, it is preferable to maintain the film depositing direction substantially vertical or within ±10° from the vertical direction. The reason of this is because, as the film depositing direction, i.e., metal particle arriving direction to the optical disk surface comes closer to the vertical line of the optical disk, an attaching area of each grain becomes smaller to easily grow a large grain.

Material of the reflective metal thin film on the optical disk may be Au, Ag, Cu, or Al but not limited to them. The aluminum may be preferable because it is easy to handle and has good properties in reflectance, etc. Aluminum alloy including small amount of additives may also be preferable.

Material of the substrate of the optical disk may be resin such as acrylic resin and epoxy resin, glass, etc., but not limited to them as long as the material has characteristics such as good optical transmittancy, small double-refraction index and excellent moisture resistance that are generally required for optical disks.

In manufacturing optical disks each having a substrate for recording information and a light reflective metal thin film disposed on the substrate to reflect a light beam made incident to the substrate to enable information recorded on the substrate to be read, the present invention deposits the metal thin film at a speed of 30 Å/sec or above, while the substrate is heated to change the diameter of grains of the metal thin film.

If the film depositing speed is slow, crystal grains of small diameter may occupy large area in the thin film. There is no specific upper limit on the depositing speed. However, if the speed is too high, it will be difficult to control the film deposition. Therefore, a practical upper limit may be 200 Å/sec or below. Various film deposition techniques such as a vacuum vapor deposition technique and a CVD technique may be used for the invention, in which the vacuum vapor deposition technique may be most practical.

It is necessary to heat the substrate to increase a proportion of crystal grains of large diameter, strengthen tightness against the substrate and reduce adverse effects of grain boundaries. The substrate may be heated before, during or after the film deposition. A heating temperature shall be lower than a thermal deformation temperature of the substrate. Practically, it is from 40°C to 80°C.

These and other objects, features and advantages of the present invention will be more apparent from the following detailed description of preferred embodiments in conjunction with the accompanying drawings.

BRIEF DESCRIPTION OF THE DRAWINGS

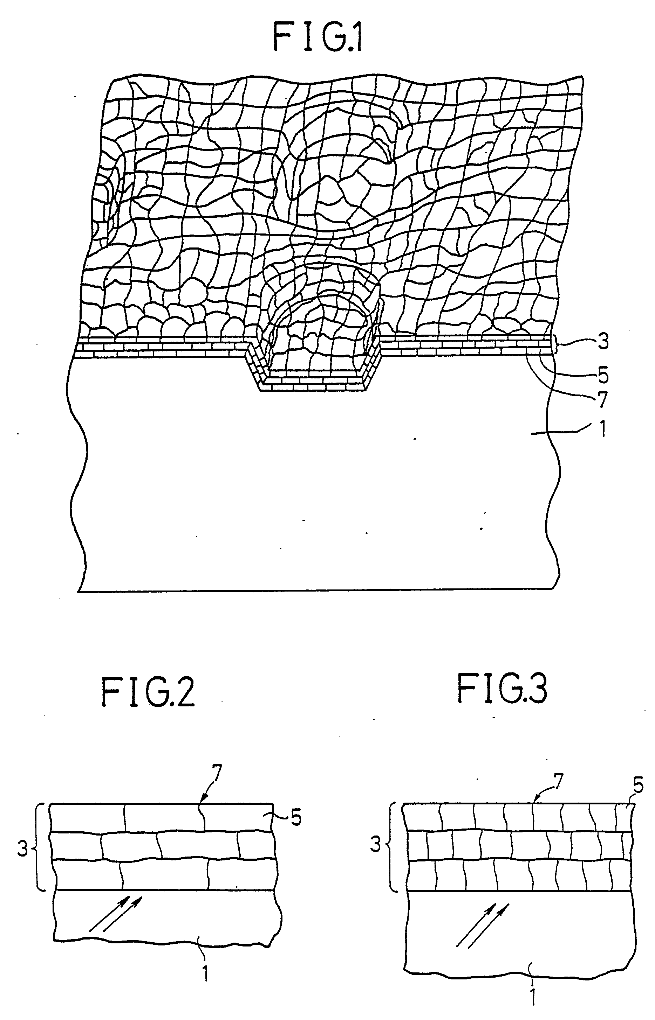

Fig. 1 is a schematic squint view showing a metal thin film formed on a disk surface;

Fig. 2 is a sectional view showing a metal thin film having crystal grains of large diameter formed on a disk surface;

Fig. 3 is a sectional view showing a metal thin film having crystal grains of small diameter formed on a disk surface;

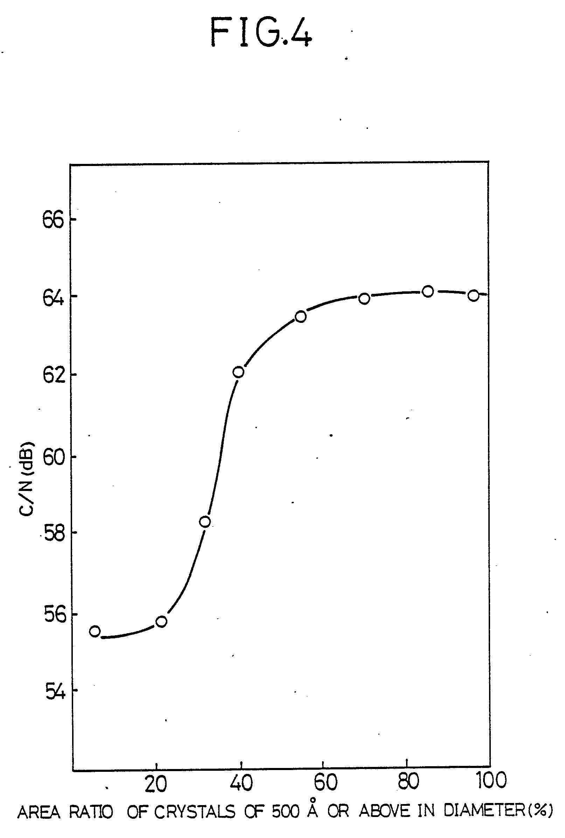

Fig. 4 is a graph showing relations of C/N ratios and area ratios occupied by large diameter crystal grains according to an example of the present invention;

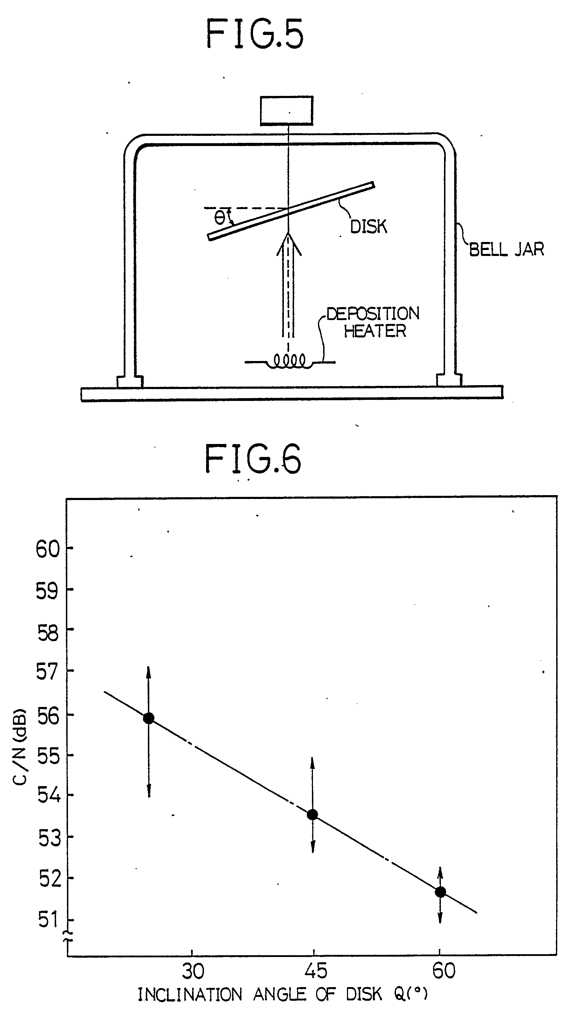

Fig. 5 is a view schematically showing the constitution of a deposition apparatus according to an example of the present invention;

Fig. 6 is a graph showing relations of C/N ratios and disk inclination angles according to an example of the present invention;

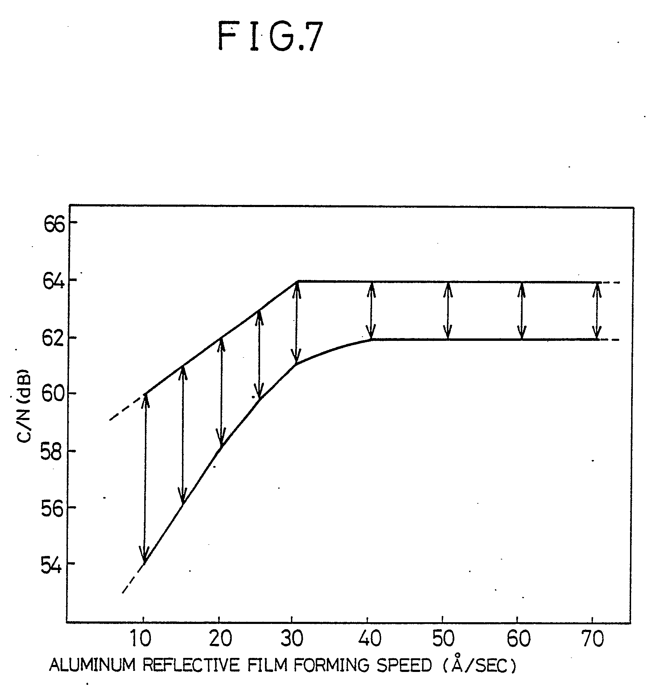

Fig. 7 is a graph showing relations of C/N ratios and depositing speeds of metal thin films according to an example of the present invention;

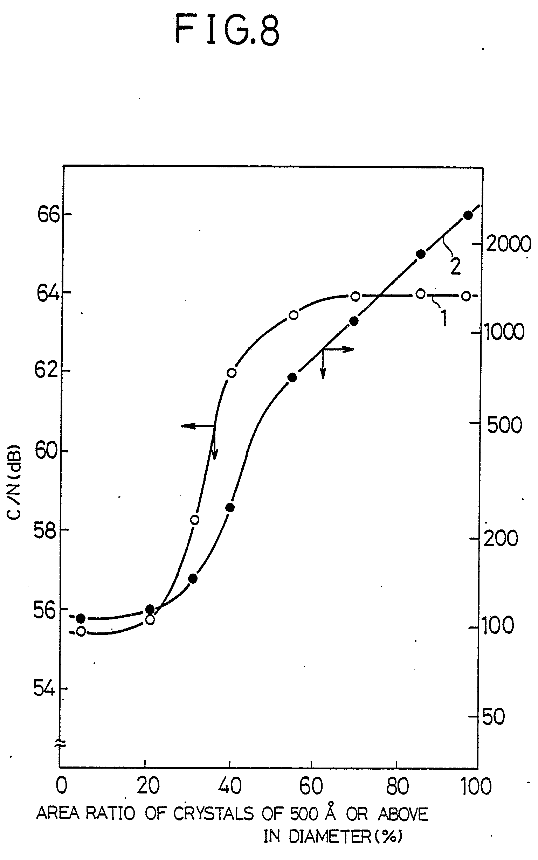

Fig. 8 is a graph showing a curve of the X-ray diffraction strength of optical disks overlapping the curve of Fig. 4, according to an example of the present invention; and

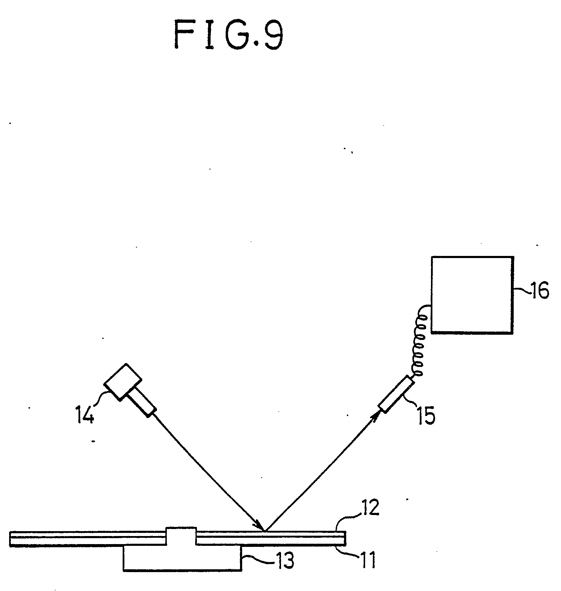

Fig. 9 is a view schematically showing an apparatus of the present invention for inspecting a reflective thin film formed on an optical disk.

DETAILED DESCRIPTION OF THE PREFERRED

## EMBODIMENTS

Examples of the present invention will be described with reference to the drawings.

Example 1

Optical disks for recording information were prepared from acrylic resin. On information recording surfaces of the disks, aluminum reflective thin films were formed, respectively, each in the thickness of about 1000 Å in a resistance heating type deposition apparatus (1 x 10⁻⁵ Torr). At this time, a current to a heater was changed to change the crystal grain diameters of the respective aluminum reflective films. The disks were heated to about 55°C before the deposition of the films. The crystal grain diameter of each disk was measured by an X-ray diffraction technique and by a transmission type electron microscope. A C/N ratio of each disk was measured by a spectrum analyzer. Fig. 4 shows the results of the measurements.

In Fig. 4, an axis of abscissa represents an area ratio of crystals of 500 Å or above in diameter in the aluminum reflective film, and an axis ordinate a C/N ratio of-the disk. When crystals of 500 Å or above in diameter occupy 60% or above of an area of the film of a certain disk, a C/N ratio of the certain disk is about 64 dB. If the area ratio is 20% or below, the S/N ratio is 55 to 56 dB.

In this example, an angle $\theta$ is zero. When the angle $\theta$ was changed to 30°, 45° and 60° in forming the thin films in a vapor deposition apparatus as shown in Fig. 5, the C/N ratio deteriorated to 52 to 56 dB as shown in Fig. 6.

In Fig. 7, an axis of abscissa represents forming speeds of the aluminum reflective films, and an axis of ordinate represents the C/N ratios to show variations in the C/N ratios. A reflectance of each sample was measured at the same position (r = 100 mm). The reflectance were in the range of 78% to 82% irrespective of the formation speeds. Each reflectance was calculated from a ratio of the strength of incident and reflected light beam of He-Ne laser of 633 nm in wavelength and 45° in incident angle.

When the formation speed exceeds 30 Å/sec, the C/N ratio was about 64 dB. When the formation speed was less than 30 Å/sec, the C/N ratio was 63 dB or below.

Variations in the C/N ratios were reduced with the formation speed exceeding 30 Å/sec.

Example 2

Aluminum reflective films were deposited on substrates at a fixed speed of 30 Å/sec, and the substrates were heated to about 55°C during the deposition. Other conditions were the same as those of Example 1. C/N ratios of this example were 62 to 64 dB which are the same as those of Example 1 at the deposition speed of 40 Å/sec.

Example 3

Aluminum reflective films were deposited on substrates at a fixed speed of 30 Å/sec, and the substrates were heated for three minutes to about 55°C after the deposition. Other conditions were the same as those of Example 1. C/N ratios of this example were 62 to 64 dB which are the same as those of Example 1 at the deposition speed of 40 Å/sec.

Example 4

Substrates were maintained at a temperature of about 55°C through the deposition process. Other conditions were the same as those of Example 1. C/N ratios of this example were 62 to 64 dB which are the same as those of Example 1 at the deposition speed of 40 Å/sec.

Example 5

According to studies carried out by the inventors, the X-ray diffraction strength of a metal thin film has a close relation with the C/N ratio thereof, and a relation of X-ray diffraction strength and grain diameter resembles to the relation of C/N ratio and grain diameter of Fig. 4. These relations are shown in Fig. 8. In Fig. 8, X-ray diffraction strengths of the present invention disks produced in Example 1 are plotted over the graph of Fig. 4.

In measuring the X-ray diffraction strength, an apparatus shown in Fig. 9 was used. This apparatus is for inspecting a reflective film of an optical disk.

In Fig. 9, an optical disk 10 is fixed with a fixing jig 13 such that a metal thin film 12 formed on an information recording surface of the optical disk 10 faces upward. An X-ray tube (copper target) 14 is positioned at an angle of about 71° with respect to a normal of the optical disk 10, and applied with a tube voltage of about 40 kV to generate X-rays (Cu Kα-ray of about 1.54 Å in wavelength) to irradiate the metal thin film 12. The strength of the X-rays diffracted by the metal thin film 12 is detected by an X-ray sensor 15 and a counter 16 which are positioned symmetrically in relation to the X-ray tube 14.

As is apparent from Fig. 8, a curve of the X-ray diffraction strength and a curve of the C/N ratio show substantially the same inclination. There, a threshold of, for example, 500 counts in the X-ray diffraction strength may be set to select acceptable optical disks which exceed the threshold.

The apparatus shown in Fig. 9 can nondestructively detect the conditions of a reflective metal thin film formed on the information recording surface of an optical disk to indicate a C/N ratio of the disk. Therefore, by installing the apparatus in an optical disk manufacturing line, all disks on the line can easily be inspected.

As an X-ray source of the apparatus of Fig. 9, not on the copper but also other materials can be used depending on metal of reflective thin films to be inspected. In addition, as an operation control unit of the apparatus of Fig. 9, a digital comparator, a general-use computer, etc., may be used.

In summary, the present invention provides optical disks having high C/N ratios and reduced variations. Further, the present invention provides an inspection apparatus which can nondestructively judge the acceptability of the C/N ratio of an optical disk through an X-ray diffraction strength inspection. This inspection apparatus is very effective for the mass production of optical disks.

Various modifications will become possible for those skilled in the art after receiving the teachings of the present disclosure without departing from the scope thereof.

## Claims

1. An optical disk to which light is made incident to read information recorded on the optical disk from the light reflected by the optical disk, the optical disk comprising:

(a) a substrate (11) for recording the information; and

(b) a light reflective metal thin film (12) formed on said substrate (11),

(c) at least 60% of a surface area of said metal thin film (12) being composed of crystals each of 500 Å or above in diameter.

2. The optical disk as claimed in claim 1, wherein at least 80% of the surface area of said metal thin film (12) is composed of crystals each of 500 Å or above in diameter.

3. The optical disk as claimed in claim 1, wherein said metal thin film (12) is made of aluminum.

4. A method of manufacturing an optical disk (10) having a substrate (11) for recording information and a light reflective metal thin film (12) formed on the substrate to reflect light made incident to the substrate (11) to enable the information recorded on the substrate (11) to be read, the method comprising the steps of:

(a) heating the substrate (11) at a predetermined temperature; and

(b) forming the metal thin film (12) on the substrate (11) at a film forming speed of 30 Å/sec or above.

5. The method as claimed in claim 4, wherein the predetermined temperature is in the range of 40° C to 80° C.

6. The method as claimed in claim 4, wherein the metal thin film (12) is formed on the substrate (11) according to a vacuum vapor deposition method.

7. The method as claimed in claim 4, wherein the metal thin film (12) is made of aluminum.

8. The method as claimed in claim 6, wherein a film deposition direction of the metal thin film (12) is substantially perpendicular to the substrate (11).

9. An inspection apparatus for inspecting conditions of an optical disk (10) to indicate a corresponding C/N ratio of a light reflective metal thin film (12) formed on an information recording surface of the optical disk (10), the apparatus comprising:

(a) An X-ray tube (14) for irradiating X-rays to the metal thin film (12) formed on the optical disk (10) which is fixed with the metal thin film (12) facing upward, said X-ray tube (14) being positoned such that the X-rays are inclined by a predetermined angle with respect to a normal line of the optical disk (10); and

(b) a detector for detecting a diffraction strength of the X-rays diffracted by the metal thin film (12) of the optical disk (10).

10. The inspection apparatus as claimed in claim 9, wherein said detector comprises an X-ray sensor (15) arranged to detect the diffraction X-rays, and a counter (16) for receiving detection signals from the X-ray sensor (15) to count the strength of the diffracted X-rays.

11. A method for inspecting conditions of an optical disk (10) to indicate a corresponding C/N ratio of a light reflective metal thin film (12) formed on an information recording surface of the optical disk (10), comprising the steps of:

(a) irradiating X-rays to the metal thin film (12) facing upward, said X-rays inclined by a predetermined angle with respect to a normal line of the optical disk (10);

(b) detecting a diffraction strength of the X-rays diffracted by the metal thin film (12) of the optical disk (10); and

(c) comparing the detected diffraction strength with a predetermined standard diffraction strength to test the metal thin film (12).

# FIG.1

# FIG.2

# FIG.3

# FIG.4

AREA RATIO OF CRYSTALS OF 500 Å OR ABOVE IN DIAMETER(%)

# FIG.5

θ

DISK

BELL JAR

DEPOSITION
HEATER

# FIG.6

C/N (dB)

INCLINATION ANGLE OF DISK Q(°)

# F I G.7

ALUMINUM REFLECTIVE FILM FORMING SPEED (Å/SEC)

# FIG.8

# FIG.9